# EUROPEAN PATENT APPLICATION

(11) **EP 2 348 396 A2**
(43) Date of publication of application: **27.07.2011**
(21) Application number: 10197302.2
(22) Date of filing: 29.12.2010
(51) Int. Cl.: G06F 3/12

(54) **Image forming apparatus, device cooperation system, service provision method, and program**

(30) Priority: 21.01.2010 JP 2010010943
(71) Applicant: CANON KABUSHIKI KAISHA, Ohta-ku Tokyo 146-8501 (JP)
(72) Inventor: Kashioka, Atsushi, Ohta-ku Tokyo (JP)
(74) Representative: Hitching, Peter Matthew

(57) **Abstract**

If it is determined that a function of an image forming apparatus is unrealizable, generation means generates screen information indicating that a service cannot be provided to a user. The screen information generated by the generation means is transmitted to a client apparatus.

## Description

### BACKGROUND OF THE INVENTION

### Field of the Invention

The present invention relates to an image forming apparatus, a device cooperation system, a service provision method, and its storage medium.

### Description of the Related Art

Recently, for the purpose of improving operational efficiency in respective companies, various applications, systems, services, or any other on-premise type applications have been introduced in each division or in the entire company. For example, Enterprise Resource Planning (ERP) , Supply Chain Management (SCM) , Customer Relationship Management (CRM) , and document management applications are practical examples of the on-premise type applications.

On the other hand, the following advanced system is useful to reduce management/maintenance costs for a server installed in a company and applications. The system is referred to as "cloud computing system" or "Software as a Service (SaaS) ", which enables numerous users to access a server computer via Internet to use various applications.

In this case, users can use various applications by accessing the above-described cloud computing system via Internet. However, an image forming apparatus (e.g., printer, digital multifunction peripheral, etc) is generally located in a company (intranet) to enable users to perform printing based on electronic data that is, for example, obtained by scanning a paper medium.

Compared to a case where both an image forming apparatus and applications are present in the same intranet, it is necessary to provide an appropriate security system (e.g., firewall) to assure a close cooperation between an image forming apparatus located in a company and applications of the cloud computing system.

As a conventional technique capable of solving the above-described problem, an information processing method discussed in Japanese Patent Application Laid-Open No. 2004-110174 includes installing a plug-in to a web browser of a client apparatus, causing the plug-in to acquire printer information via a printer driver, and generating print setting conditions.

According to the conventional technique, displaying the print setting conditions generated by the plug-in brings an effect of reducing application load. Further, even in a case where an application is present in a cloud computing system, cooperating with a printer becomes feasible because the application is not required to communicate with an image forming apparatus.

### SUMMARY OF THE INVENTION

According to a first aspect of the present invention, there is provided an image forming apparatus as specified in claims 1 to 3, and 6. According to a second aspect of the present invention, there is provided a device cooperation system as specified in claim 4. According to a third aspect of the present invention, there is provided a client apparatus as specified in claim 5. According to a fourth aspect of the present invention, there is provided a method for controlling a device cooperation system as specified in clam 7. According to a fifth aspect of the present invention, there is provided a program that causes a computer to execute a service provision method as specified in clam 8.

Further features and aspects of the present invention will become apparent from the following detailed description of exemplary embodiments with reference to the attached drawings.

### BRIEF DESCRIPTION OF THE DRAWINGS

The accompanying drawings, which are incorporated in and constitute a part of the specification, illustrate exemplary embodiments, features, and aspects of the invention and, together with the description, serve to explain the principles of the invention.

Fig. 1 schematically illustrates a device cooperation system according to a first exemplary embodiment of the present invention.

Fig. 2A is a block diagram illustrating a hardware configuration of a client PC 10 included in the device cooperation system according to the first exemplary embodiment of the present invention, and Fig. 2B illustrates a hardware configuration of a digital multifunction peripheral 20 included in the device cooperation system according to the first exemplary embodiment of the present invention.

Fig. 3 is a block diagram illustrating an example software configuration of the device cooperation system according to the first exemplary embodiment of the present invention.

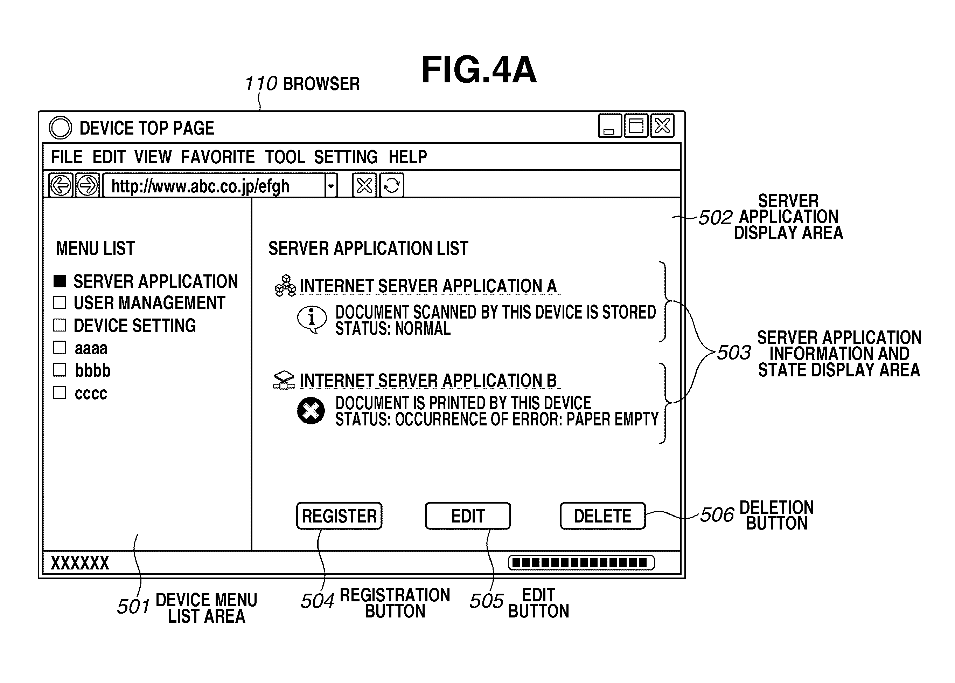

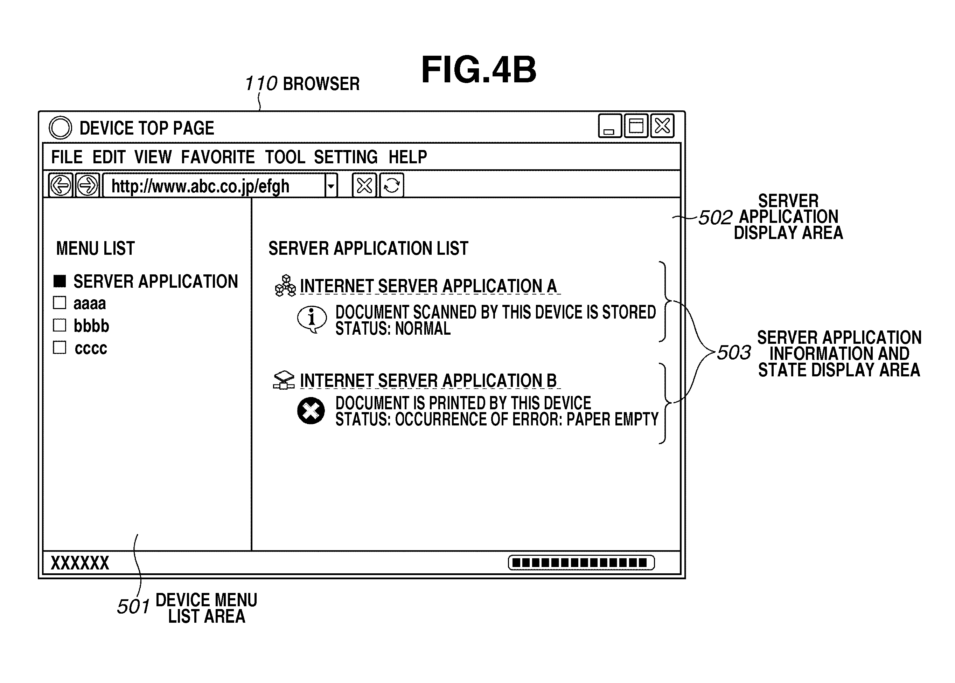

Fig. 4A illustrates an example user interface (UI) of a device application 31 that can be displayed in a browser of the client PC 10 when an administrative user logs in the digital multifunction peripheral 20 in the device cooperation system according to the first exemplary embodiment of the present invention, and Fig. 4B illustrates an example user interface of the device application 31 that can be displayed in the browser of the client PC 10 when a general user logs into the digital multifunction peripheral 20 in the device cooperation system according to a second exemplary embodiment of the present invention.

Fig. 5 is a flowchart illustrating a processing procedure of UI display processing to be performed when a user of the client PC 10 accesses the device application 23 in the device cooperation system according to the first exemplary embodiment of the present invention.

Fig. 6 is a flowchart illustrating a processing procedure of top screen generation processing that can be performed by the device application 31 in the device cooperation system according to the first exemplary embodiment of the present invention.

Fig. 7 illustrates an example of a definition file that the device application 23 can acquire from the server application 31 in the device cooperation system according to the first exemplary embodiment of the present invention.

Fig. 8 is a flowchart illustrating an example procedure of processing to be performed when the administrative user registers the server application 31 to the device application 23 in the device cooperation system according to the first exemplary embodiment of the present invention.

Fig. 9 is a flowchart illustrating an example procedure of processing to be performed when a user accesses the server application 31 in the device cooperation system according to the first exemplary embodiment of the present invention.

Fig. 10 is a flowchart illustrating an example procedure of processing for transmitting information relating to the digital multifunction peripheral 20 to the server application 31 in the device cooperation system according to the first exemplary embodiment of the present invention.

Fig. 11 is a flowchart illustrating a processing procedure of UI generation processing that can be performed by the server application 31 in the device cooperation system according to the first exemplary embodiment of the present invention.

Fig. 12 illustrates an example user interface that can be displayed in the browser 110 of the client PC 10 when a user accesses the server application 31 in the device cooperation system according to the first exemplary embodiment of the present invention.

Fig. 13 is a flowchart illustrating an example procedure of processing to be performed when a user accesses the server application 31 in the device cooperation system according to the second exemplary embodiment of the present invention.

Fig. 14 is a flowchart illustrating an example procedure of processing for transmitting information relating to the digital multifunction peripheral 20 to the server application 31 in the device cooperation system according to the second exemplary embodiment of the present invention.

Fig. 15 illustrates an example user interface that can be displayed in the browser 110 of the client PC 10 when a user accesses the server application 31 in the device cooperation system according to the second exemplary embodiment of the present invention.

### DESCRIPTION OF THE EMBODIMENTS

Various exemplary embodiments, features, and aspects of the invention will be described in detail below with reference to the drawings.

As a conventional technique, a plug-in installed in a browser can access an appropriate server apparatus via Internet and then acquire information relating to an image forming apparatus. Therefore, the plug-in can confirm whether the image forming apparatus is available after accessing an application.

However, the above-described conventional procedure may include useless operation in the following point. For example, a user may use an application of an internet server to generate print data and cause an image forming apparatus to perform printing based on generated print data. In this respect, the first thing to do for the user is accessing the application of the internet server.

However, if the print function of the image forming apparatus is unavailable due to an error at this moment, the user is unable to know such a situation (i.e., that the user cannot receive a desired service) before the user completes accessing the application of the internet server. As a result, the action to access the application of the internet server having been done by the user becomes useless.

A cloud computing system is an example internet server that can provide various applications. It is usual that the cloud computing system employs a metered charging system. Therefore, a cloud vendor requests each user to pay usage charge according to a used amount of cloud resources. Accordingly, users may uselessly use (or may unnecessarily access) cloud resources. Further, users may uselessly pay for communications depending on the amount of data or the amount of used storage.

An object of the present invention is to provide an image forming apparatus capable of solving the above-described problem. Another object of the present invention is to provide a device cooperation system, a service provision method, or a program.

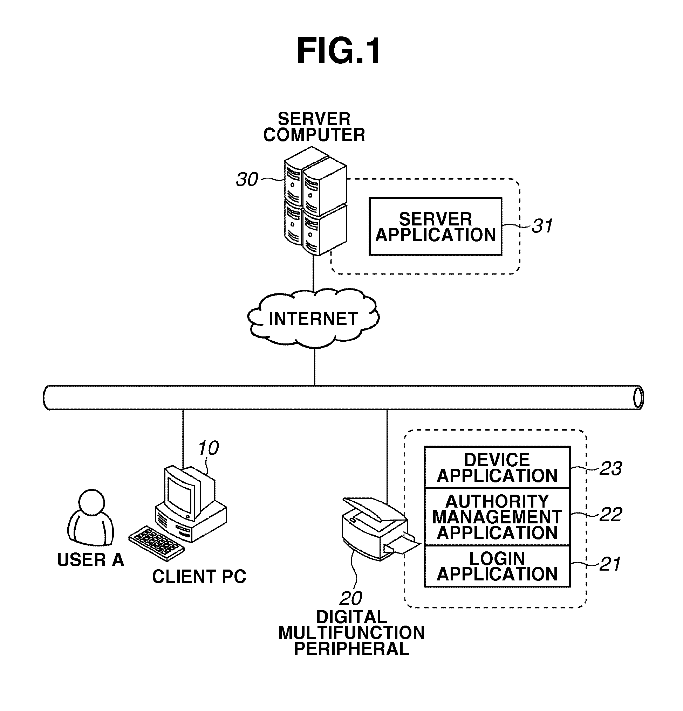

A first exemplary embodiment of the present invention is described below with reference to Fig. 1 through Fig. 12. First, an example system configuration is described below with reference to Fig. 1. Fig. 1 schematically illustrates a device cooperation system according to the present exemplary embodiment. The device cooperation system according to the present exemplary embodiment includes an image forming apparatus 20 (hereinafter, referred to as a "digital multifunction peripheral 20") that is functionally operable as a copy machine, a printer, a scanner, or a facsimile machine, and a service provision apparatus 30 (hereinafter, referred to as a "server computer 30").

The device cooperation system according to the first exemplary embodiment further includes a client apparatus (hereinafter, referred to as "client PC 10") that allows a user A to access the multifunction peripheral 20 using a browser installed thereon. The client PC 10 is connected to the digital multifunction peripheral 20 via a network. The client PC 10 and the digital multifunction peripheral 20 are connected to the server computer 30 via the Internet. Therefore, the client PC 10, the digital multifunction peripheral 20, and the server computer 30 can communicate with each other.

In the present exemplary embodiment, the digital multifunction peripheral 20 includes a login application 21 that is usable to perform user management at the digital multifunction peripheral 20, an authority management application 22 that is usable to manage user authority, and a device application 23 that cooperates with a server application 31 described below.

A device control system according to the present exemplary embodiment uses the digital multifunction peripheral 20 as an image forming apparatus. However, the image forming apparatus can be a printer or a consumer scanner.

The server computer 30 includes the server application 31 that can cooperatively operate with the digital multifunction peripheral 20. The server computer 30 can provide various services to users in cooperation with the digital multifunction peripheral 20. In the device control system according to the present exemplary embodiment, the server application 31 is a server application that is functionally operable to manage various types of documents, although its function is not limited thereto.

For example, the services that can be provided by the server computer 30 include print service, scanning service, and FAX service. For example, according to the print service, the server computer 30 performs processing for converting a document into data having a predetermined format, such as Page Description Language (PDL) or Portable Document Format (PDF), according to which the printer can perform printing. When the digital multifunction peripheral 20 receives converted document data having a printable format, the digital multifunction peripheral 20 performs print processing based on the received document data. As described above, the server computer 30 and the digital multifunction peripheral 20 cooperatively provide various services to users.

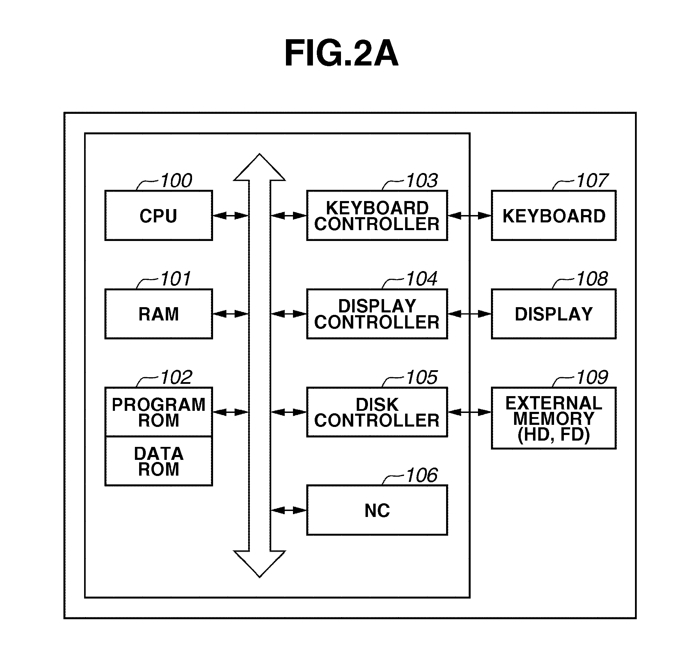

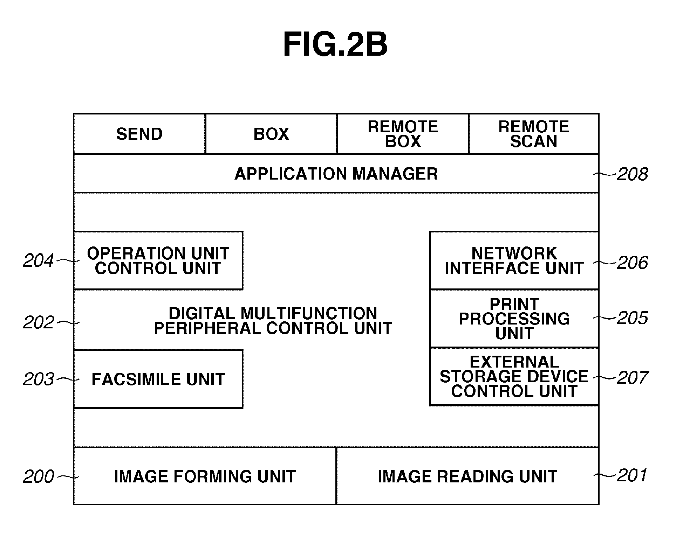

Next, example hardware configurations are described below in more detail with reference to Figs. 2A and 2B. Fig. 2A illustrates a hardware configuration of a personal computer (PC) that constitutes a part of the device cooperation system according to the present exemplary embodiment. The hardware configuration illustrated in Fig. 2A is a hardware configuration of a general information processing apparatus. The hardware configuration of a general information processing apparatus can be applied to the PC according to the present exemplary embodiment.

In Fig. 2A, a control processing unit (CPU) 100 can execute a program (e.g., operating system (OS) or application) which is, for example, stored in a program ROM of a read only memory (ROM) 102 or loaded from a hard disk 109 to a random access memory (RAM) 101. The above-described execution of the program can realize processing to be performed according to each flowchart described below.

The RAM 101 is functionally operable as a main memory or a work area for the CPU 100. A keyboard controller 103 can control key information input via a keyboard 107 or a pointing device (not illustrated). A display controller 104 can control various displays to be performed by a display device 108.

A disk controller 105 can control data access to the hard disk (HD) 109 or a floppy disk (FD) that stores various data. A network controller (NC) 106, which is connected to a network, can control processing for communicating with other devices connected to the network.

Fig. 2B illustrates a hierarchical configuration of the digital multifunction peripheral 20 according to an exemplary embodiment of the present invention. In Fig. 2B, an image forming unit 200 is configured to perform sequential image forming processes (e.g., handling of papers and transfer/fixing of images) to form an image on a storage medium (e.g., a recording paper). The image forming unit 200 includes, for example, an inkjet printer or an electro-photographic image forming unit.

An image reading unit 201 includes a scanner that can optically read an image of an original (document) and convert the read image into digital image information. The image reading unit 201 can output the digital image information to the image forming unit 200 that forms an image based on the digital image information. The image reading unit 201 can also send the digital image information to a facsimile unit 203 or a network interface unit 206 that can transmit the image information via a communication circuit.

A digital multifunction peripheral control unit 202 is configured to control operations of the image forming unit 200 and the image reading unit 201. For example, the digital multifunction peripheral control unit 202 controls the image forming unit 200 to copy original (document) information read by the image reading unit 201. Further, the digital multifunction peripheral control unit 202 includes the network interface unit 206, a print processing unit 205, the facsimile unit 203, and an operation unit control unit 204. The digital multifunction peripheral control unit 202 can control transmission and reception of information between these units.

The facsimile unit 203 can perform transmission and reception of facsimile images. More specifically, the facsimile unit 203 can transmit digital image information read by the image reading unit 201. The facsimile unit 203 can decode a received facsimile signal to cause the image forming unit 200 to perform recording based on the decoded signal. The operation unit control unit 204 performs a control for generating a signal representing a user' s operation performed on an operation panel of the operation unit. The operation unit control unit 204 further performs a control for displaying various data and messages on an operation unit or a display unit.

The print processing unit 205 performs a control for processing print data received, for example, via the network interface unit 206 and outputting the processed print data to the image forming unit 200 that performs print processing based on the print data. The network interface unit 206 controls transmission and reception of data performed via a communication circuit with other communication terminals.

An external storage device control unit 207 can store, when the image forming unit 200 converts an image read by the image reading unit 201 into data having a data format storable in an external storage device, the converted data in an external storage device. Further, the external storage device control unit 207 can read the stored data from an external storage device and cause the image forming unit 200 to perform print processing based on the read data. Further, the external storage device control unit 207 can transmit the read data to an external device via the network interface unit 206.

Further, an application manager 208 manages copy, scan, and scan and send applications. The application manager 208 accepts startup, termination, installation, and uninstallation instructions for respective applications. The application manager 208 receives device information generated by the digital multifunction peripheral control unit 202 and performs a control for each application based on the received information. The login application 21, the authority management application 22, and the device application 23 can be controlled by the application manager 208.

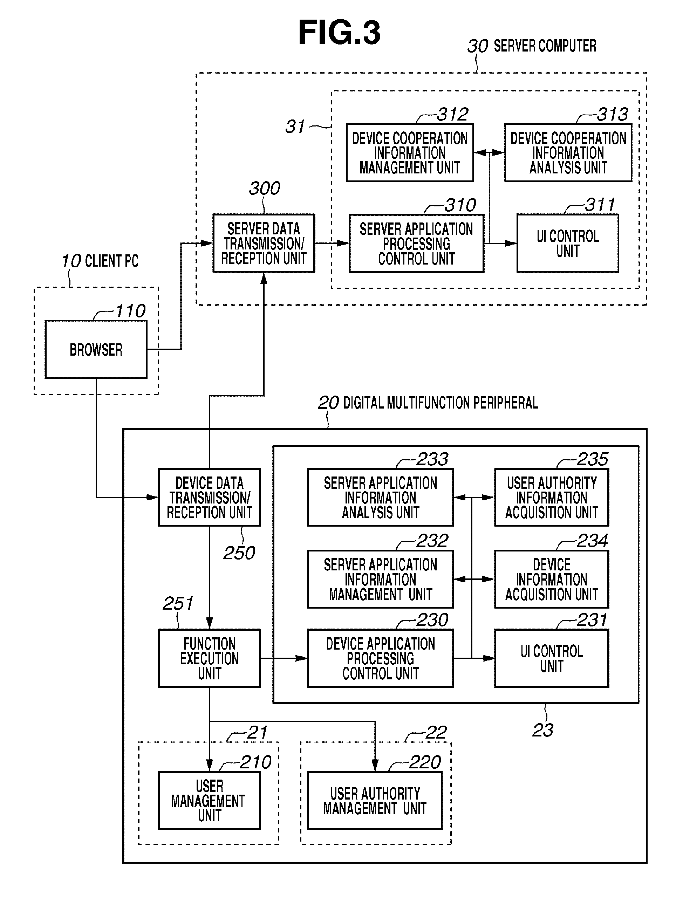

Next, an example software configuration is described below in more detail with reference to Fig. 3. Fig. 3 illustrates a software configuration of the device cooperation system according to an exemplary embodiment of the present invention, which includes the client PC 10, the digital multifunction peripheral 20, and the server computer 30.

The client PC 10 has the following software configuration. The browser 110 accesses the digital multifunction peripheral 20 (i.e., the image forming apparatus according to the present exemplary embodiment), or the server computer 30, in response to an operation of the user A and displays a user interface. In the present exemplary embodiment, the browser 110 is a program file stored in the external memory 109 of the client PC 10.

The browser 110 is loaded into the RAM 101 and executed by the CPU 100. The executed browser 110 is displayed on the display device 108 so that the user A can operate the browser 110 with the keyboard 107 and a pointing device (not illustrated).

The browser 110 can be a general web browser, such as Internet Explorer or Fire Fox. The browser 110 displays a screen based on screen information (e.g., Hypertext Markup Language (HTML) file).

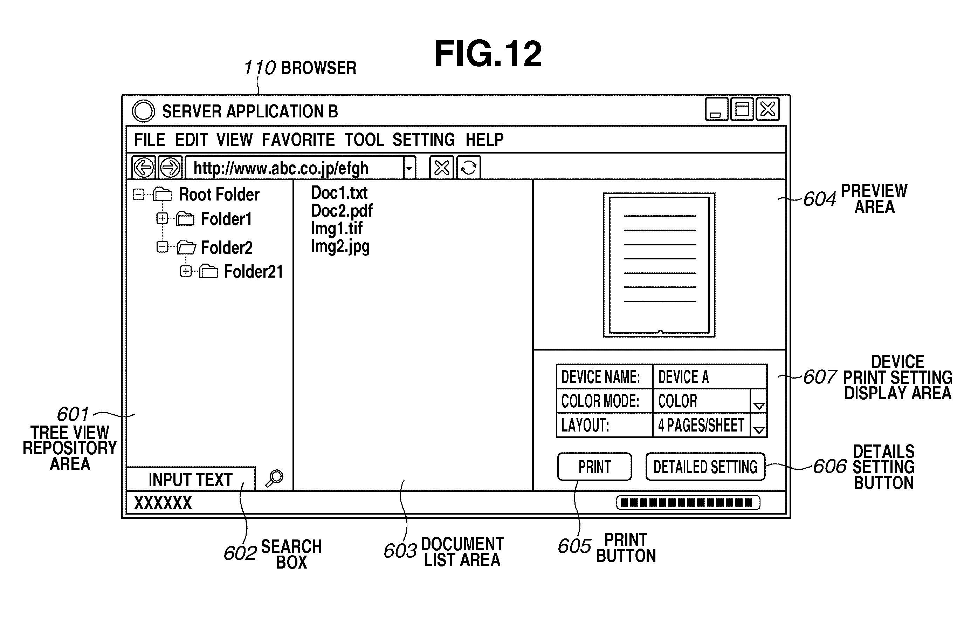

Figs. 4A and 4B illustrate example user interfaces of the device application 23 that can be displayed in the browser 110 of the client PC 10. Fig. 12 illustrates an example user interface of the server application 31.

Next, the digital multifunction peripheral 20 has the following software configuration. A device data transmission/reception unit 250 receives a request, which has derived from a user's instruction, from the browser 110 of the client PC 10 via the network interface unit 206, and notifies a processing result to the browser 110. Further, the device data transmission/reception unit 250 transmits information to a server data transmission/reception unit 300 of the server computer 30 according to an instruction of the device application 23, and receives a processing result of the server application 31.

A function execution unit 251 corresponds to the digital multifunction peripheral control unit 202. The function execution unit 251 controls functional operations of the digital multifunction peripheral 20 (i.e., the image forming apparatus according to the present exemplary embodiment), and performs instruction and management processing for each unit. A user management unit 210 provided in the login application 21 receives an instruction from the function execution unit 251, and performs processing for displaying a login screen and managing user information. Further, the user management unit 210 performs processing for authenticating a user's input.

A user authority management unit 220 provided in the authority management application 22 receives an instruction from the function execution unit 251, and then generates and manages access control information relating to a login user of the digital multifunction peripheral 20. A device application processing control unit 230 provided in the device application 23 receives an instruction to the device application 23, and performs a control for each processing unit.

A user interface (UI) control unit 231 generates a user interface that reflects a processing result of the device application 23. In the present exemplary embodiment, the user interface is not limited to HTML or JavaScript, and can be any other type if it can be displayed in the browser 110. A server application information management unit 232 manages and stores definition information acquired from the server application 31, which is set to cooperate with the digital multifunction peripheral 20, according to a user's instruction.

A server application information analysis unit 233 analyzes definition information acquired from the server application 31, and extracts information required when the digital multifunction peripheral 20 performs cooperation processing. A device information acquisition unit 234 acquires information and status of the digital multifunction peripheral 20 that is required when cooperating with the server application 31 according to an instruction supplied from the device application processing control unit 230.

The user authority information acquisition unit 235 acquires information and function of the digital multifunction peripheral 20 to be restricted according to user authority when cooperating with the server application 31 according to an instruction supplied from the device application processing control unit 230.

Next, a software configuration of the server application 31 in the server computer 30 is described below. The server data transmission/reception unit 300 receives a request from the browser 110 of the client PC 10, and returns a result of processing performed in the server application 31 as a response. Similarly, the server data transmission/reception unit 300 receives information relating to the digital multifunction peripheral 20 according to an instruction from the device application 23, and returns a result of processing performed in the server application 31 as a response.

A server application processing control unit 310 controls the server application 31 according to the present exemplary embodiment. More specifically, the server application processing control unit 310 receives a request from the browser 110, or from the device application 23, via the server data transmission/reception unit 300, and performs instruction and management processing for each unit of the server application 31.

A UI control unit 311 generates a user interface that reflects a result of processing performed in the server application 31. In the present exemplary embodiment, the user interface is not limited to HTML or JavaScript, and can be any other type if it can be displayed in the browser 110.

A device cooperation information management unit 312 stores and manages definition information that is required when the server application 31 cooperates with the digital multifunction peripheral 20.

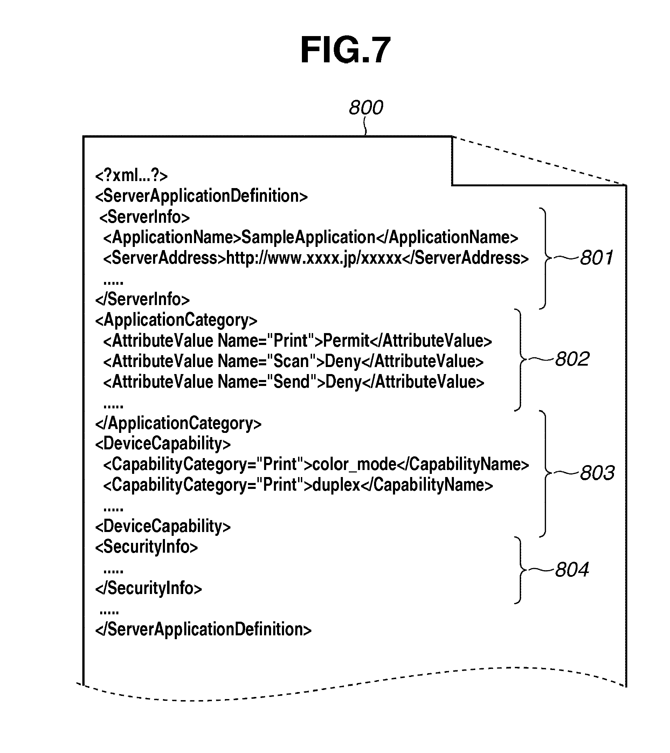

Fig. 7 illustrates an example of definition information 800 that defines the server application 31, which is declared in a schema, such as Extensible Markup Language (XML). The content declared by the definition information 800 includes general information (801) of the server application 31, such as a name and a URL, usable functions (802) of the digital multifunction peripheral 20, and required capability information (803) of the digital multifunction peripheral 20. The content declared in the field 802 illustrated in Fig. 7 is that the server application 31 uses only the print function of the digital multifunction peripheral 20.

Further, the content declared in the field 803 is that the server application 31 requires information (color mode, two-sided print mode, etc.) relating to the print function, as capability information of the digital multifunction peripheral 20. The definition information 800 may include any other information. For example, the definition information 800 may include security information (804) that is required to assure the content of the definition information 800.

In the present exemplary embodiment, the definition information 800 is stored in the server application information management unit 232 of the device application 23 when the server application 31 is set so as to cooperate with the digital multifunction peripheral 20 according to a user's instruction. The device cooperation information analysis unit 313 analyzes various kinds of information relating to the digital multifunction peripheral 20 having been received from the device application 23, to cooperate with the digital multifunction peripheral 20, and the UI control unit 311 generates a UI based on the extracted information.

Next, example processing that can be performed by the device cooperation system according to the present exemplary embodiment is described below in more detail with reference to Fig. 1 through Fig. 12.

First, an example method for displaying a screen that enables users to access the device application is described below. For example, the user A accesses the device application 23 of the digital multifunction peripheral 20 according to the present exemplary embodiment via the browser 110 of the client PC 10 to display a list of the server application 31 that can cooperate with the digital multifunction peripheral 20.

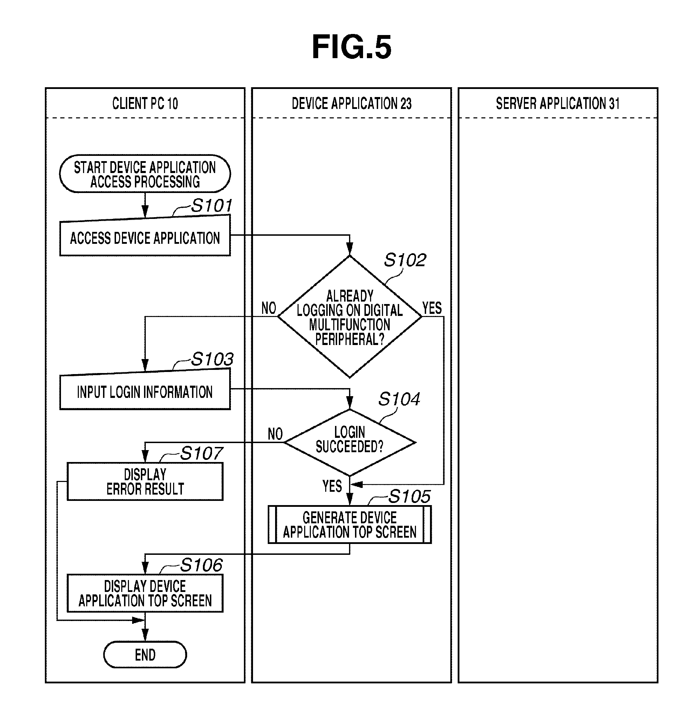

Fig. 5 is a flowchart illustrating a processing procedure of UI display processing to be performed when the user A of the client PC 10 accesses the device application 23. Example device application access processing is described below with reference to Fig. 3 and Fig. 5.

In step S101, the user A instructs the browser 110 to access the device application 23 of the digital multifunction peripheral 20 according to the present exemplary embodiment, for example, by inputting URL of the device application 23 to the browser 110.

Subsequently, if the device data transmission/reception unit 250 receives a request of the user A, then in step S102, the device application 23 confirms whether the user A is already logged on the digital multifunction peripheral 20. More specifically, when the function execution unit 251 receives a notice from the device data transmission/reception unit 250, the function execution unit 251 instructs the user management unit 210 to confirm whether session information, such as cookie, is included in the request. However, any other unit may be configured to determine whether a user is already logged on the digital multifunction peripheral 20.

Subsequently, if it is determined that the user A is not currently logged into the digital multifunction peripheral 20 (NO in step S102), then in step S103, the function execution unit 251 returns screen information of the login screen to the browser 110 as a response via the device data transmission/reception unit 250. The user A inputs login information relating to the user A on the login screen displayed in the browser 110.

Subsequently, if in step S103 the login information is transmitted from the user A via the browser 110, then in step S104, the function execution unit 251 confirms whether the user A can log in the digital multifunction peripheral 20. More specifically, the function execution unit 251 confirms whether a user indicated by the login information received by the user management unit 210 is present.

Subsequently, if it is determined that the login operation by the user A has failed (NO in step S104), then in step S107, the function execution unit 251 instructs the browser 110 to display an UI that notifies a result of failure in the login operation. If it is determined that the login operation of the user A has succeeded (YES in S102 or S104), then in step S105, the function execution unit 251 instructs the device application processing control unit 230 to generate a top screen of the device application 23. An example processing for generating the top screen of the device application 23 is described below.

Subsequently, if in step S105 the top screen of the device application 23 is generated, then in step S106, the function execution unit 251 requests the browser 110 via the device data transmission/reception unit 250 to display the top screen. Hereinbelow, an example method for displaying the screen that enables users to access the device application is described below.

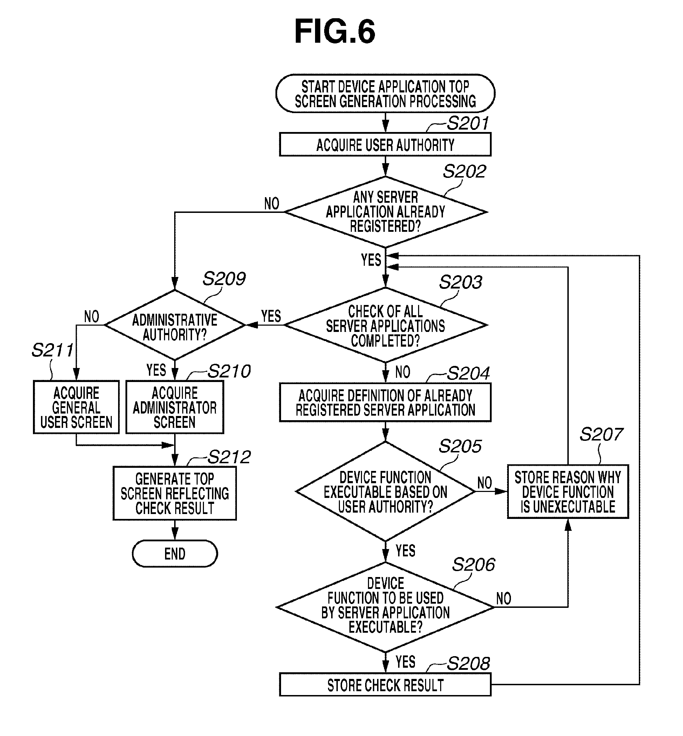

Next, an example method for generating screen information relating to the top screen of the device application 23 is described below in more detail. The screen information relating to the top screen of the device application 23 according to the present exemplary embodiment, which displays a list of the server application 31 that can cooperate with the digital multifunction peripheral 20, is generated in step S105. Fig. 6 is a flowchart illustrating a processing procedure of example processing for generating the top screen of the device application 23. Hereinbelow, the top screen generation processing is described below in more detail with reference to Fig. 3 through Fig. 7.

In step S201, the device application processing control unit 230 instructs the user authority information acquisition unit 235 to acquire authority information of the user A from the user authority management unit 220 of the authority management application 22.

In the present exemplary embodiment, it is presumed that the user authority includes administrative user authority and general user authority. However, the user authority may further include any other authority group. The authority information can be used to determine whether the user has the right to use the server application 31.

Subsequently, in step S202, the device application processing control unit 230 confirms whether there is any registered server application 31 having been set so as to cooperate with the digital multifunction peripheral 20. More specifically, it is confirmed whether the server application information management unit 232 stores the definition information 800 acquired from the server application 31, which is set so as to cooperate with the digital multifunction peripheral 20.

In the present exemplary embodiment, it is presumed that the administrative user can perform setting to cooperate with the digital multifunction peripheral 20 by registering the server application 31 to the device application 23. Further, the definition information 800 can be stored in the server application information management unit 232 by registering the server application 31 to the device application 23.

The unit that enables the device application 23 and the server application 31 to cooperate with each other is not limited to the above-described unit. An example of processing for registering the server application 31 to the device application 23, which is performed by the administrative user, is described below.

Subsequently, if it is determined that the registered server application 31 is present (YES in step S202), then in step S203, the device application processing control unit 230 performs confirmation processing. More specifically, the device application processing control unit 230 confirms whether information relating to all of the registered server applications 31 has been checked based on the definition information 800 stored in the server application information management unit 232.

Subsequently, if it is determined that there remains unchecked information relating to the server application 31 (NO in step S203), then in step S204, the device application processing control unit 230 performs acquisition processing. More specifically, the device application processing control unit 230 acquires the definition information 800 that defines the unchecked server application 31 from the server application information management unit 232.

More specifically, the server application information analysis unit 233 analyzes the information relating to the function (see 802) of the digital multifunction peripheral 20 (i.e., functional information) that can be used by the server application 31, which is included in the acquired definition information 800.

Subsequently, in step S205, the device application processing control unit 230 performs comparison processing. More specifically, the device application processing control unit 230 compares the user's authority information acquired by the user authority information acquisition unit 235 in step S201 with the functions of the digital multifunction peripheral 20 that can be used by the server application 31 acquired in step S204.

Next, based on the comparison result, the device application processing control unit 230 confirms whether the user can execute the functions (e.g., print, scan, send, and FAX) of the digital multifunction peripheral 20 that can be used by the server application 31.

Subsequently, in step S206, the device application processing control unit 230 confirms the latest state (e.g., error generation status) of the digital multifunction peripheral 20 via the device information acquisition unit 234.

Next, the device application processing control unit 230 confirms an occurrence of an error that prevents execution of the function of the digital multifunction peripheral 20 to be used by the server application 31, which is acquired in step S204 with reference to the acquired latest state of the digital multifunction peripheral 20.

More specifically, the device application processing control unit 230 confirms an occurrence of an error (e.g., ink out, paper empty, or paper jam) in a case where the server application 31 uses the print function of the digital multifunction peripheral 20. Thus, the device application processing control unit 230 can determine whether each function of the digital multifunction peripheral 20 can be realized.

Subsequently, if in step S205 or S206 it is determined that the function of the digital multifunction peripheral 20 to be used by the server application 31 cannot be realized (NO in step S205 or S206), then in step S207, the digital multifunction peripheral 20 performs storage processing. More specifically, the device application processing control unit 230 stores the reason why the function of the digital multifunction peripheral 20 cannot be realized together with a determination result.

Subsequently, if in step S205 and S206 it is determined that the function of the digital multifunction peripheral 20 to be used by the server application 31 is realizable (YES in step S205 and S206), then in step S208, the device application processing control unit 230 stores the determination result.

If in step S202 or S203 it is determined that the information relating to all of the registered server applications 31 has been checked, then in step S209, the device application processing control unit 230 confirms whether the user is the administrative user.

Subsequently, if it is determined that the user is the administrative user (YES in step S209), then in step S210, the device application processing control unit 230 acquires screen information (e.g., HTML file) for the administrator from the UI control unit 231. Subsequently, if it is determined that the user is a general user (NO in step S209), then in step S211, the device application processing control unit 230 acquires screen information for the general user from the UI control unit 231.

In step S212, the device application processing control unit 230 instructs the UI control unit 231 to generate screen information relating to the top screen of the device application 23 so as to reflect implementation/non-implementation of the function of the digital multifunction peripheral 20 acquired in step S207 and step S208. The generated screen information relating to the top screen is transmitted to the client PC 10.

Fig. 4A illustrates an example top screen of the device application 23 that can be displayed in the browser 110 of the client PC 10 when the administrative user accesses the device application 23. Fig. 4B illustrates an example top screen of the device application 23 that can be displayed in the browser 110 of the client PC 10 when a general user accesses the device application 23. The top screen of the device application 23 includes a device menu list area 501 that displays a menu list of various functions/settings relating to the digital multifunction peripheral 20 and a server application display area 502 that displays a list of the server applications 31 registered by the device application 23.

Further, the server application display area 502 includes a server application information and state display area 503. Further, the server application display area 502 includes a registration button 504 that enables the administrative user to register the server application 31 to the device application 23, an edit button 505 that enables the administrative user to edit the registered information, and a deletion button 506 that enables the administrative user to delete the registered information.

The administrative user oriented top screen illustrated in Fig. 4A is different from the general user oriented top screen illustrated in Fig. 4B in the following points. More specifically, only the administrative user oriented top screen illustrated in Fig. 4A includes the buttons 504, 505, and 506 that are operable to perform setting for cooperative processing between the server application 31 and the device application 23.

In the present exemplary embodiment, information relating to the server applications 31 and implementation determination with respect to the function of the digital multifunction peripheral 20 to be used by each server application 31 are displayed in the server application information and state display area 503.

Thus, the user can confirm whether the digital multifunction peripheral 20 cooperating with the server application 31 is usable, by accessing the device application 23, without accessing the server application 31.

The top screens according to the present exemplary embodiment are not limited to the example screens illustrated in Figs. 4A and Fig. 4B in display pattern, area configuration, and control content. Therefore, the top screens can be modified in various ways if the required function can be realized.

Next, processing for registering the server application 31 to the device application 23 is described below in more detail. In a case where the user A is an administrative user, setting the server computer 30 so as to cooperate with the digital multifunction peripheral 20 is feasible by registering the server application 31 to the device application 23.

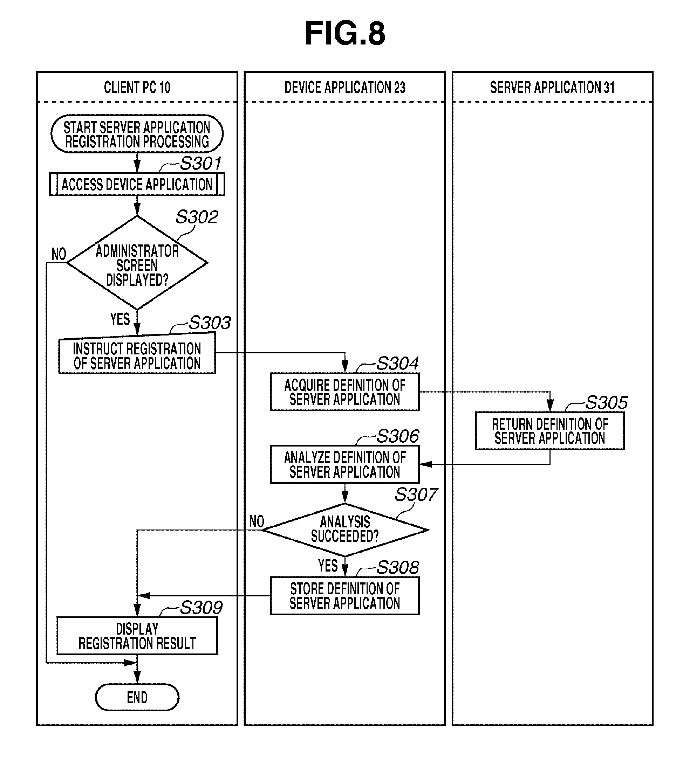

Fig. 8 is a flowchart illustrating a processing procedure of example processing to be performed when the server application 31 is registered to the device application 23. Example server application registration processing is described below in detail with reference to Fig. 3 through Fig. 8.

In step S301, the user A accesses the device application 23 via the browser 110 of the client PC 10. The processing to be performed in this step is similar to the processing described in the device application access processing illustrated in Fig. 5, and therefore the description for this step is not repeated.

Subsequently, in step S302, the user A confirms whether the administrative user oriented top screen (i.e., the example illustrated in Fig. 4A) of the device application 23 is displayed in the browser 110.

Subsequently, if it is determined that the administrative user oriented top screen is displayed (YES in step S302), then in step S303, the user A presses the registration button 504 illustrated in Fig. 4A to instruct the device application 23 to newly register the server application 31. In this case, the user A inputs information (e.g., URL) relating to the newly registered server application 31 on a displayed user interface (not illustrated).

Subsequently, if the device application processing control unit 230 receives a registration instruction having been input by the user A via the browser 110 in step S303, then in step S304, the device application processing control unit 230 acquires the definition information 800 that defines the newly registered server application 31.

More specifically, the device application processing control unit 230 accesses the URL of the server application 31 having been input by the user A via the device data transmission/reception unit 250, and acquires the definition information 800. In the present exemplary embodiment, the server application 31 is an interface opened to the public, such as REST or Web service, which is operable as a unit configured to acquire the definition information 800.

Subsequently, if in step S304 acquisition of the definition information 800 is requested from the device application processing control unit 230, then in step S305, the server application processing control unit 310 returns a response including the definition information 800 stored in the device cooperation information management unit 312.

Subsequently, in step S306, the device application processing control unit 230 instructs the server application information analysis unit 233 to analyze the definition information 800 having been transmitted in step S305, and then analysis is performed. More specifically, the server application information analysis unit 233 determines whether the content of the definition information 800 has an analyzable format, or determines whether the function (see 802) of the digital multifunction peripheral 20 to be used by the server application 31 is present in a digital multifunction peripheral. The analysis processing is not limited to the above-described processing.

Subsequently, in step S307, the device application processing control unit 230 confirms an analysis result of the definition information 800 having been analyzed in step S306.

If in step S307 it is determined that the analysis on the definition information 800 has succeeded, then in step S308, the device application processing control unit 230 manages and stores the definition information 800 in the server application information management unit 232.

Subsequently, in step S309, the device application processing control unit 230 displays in the browser 110 the analysis result of the definition information 800 confirmed in step S307. Further, the device application processing control unit 230 displays in the browser 110 the registration result of the server application 31 having been newly registered in the device application 23 in step S308.

In the present exemplary embodiment, the user A directly inputs the information (e.g., URL) relating to the server application 31 to register the server application 31 to the device application 23. However, any other unit can be used. For example, the list of server applications having the capability of cooperating with the digital multifunction peripheral 20 can be managed by a portal site (not illustrated) on the Internet.

In this case, the device application 23 periodically accesses the portal site and, if a new server application is present, the device application 23 automatically acquires and registers the definition information relating to the newly detected server application. Further, if a new server application is registered at the portal site, it is useful to send an e-mail notifying the administrative user of the newly registered server application.

The administrative user determines whether to register a new server application based on the notified information.

Next, an example method for accessing the server application 31 via the top screen illustrated in Fig. 4A or Fig. 4B is described below in more detail.

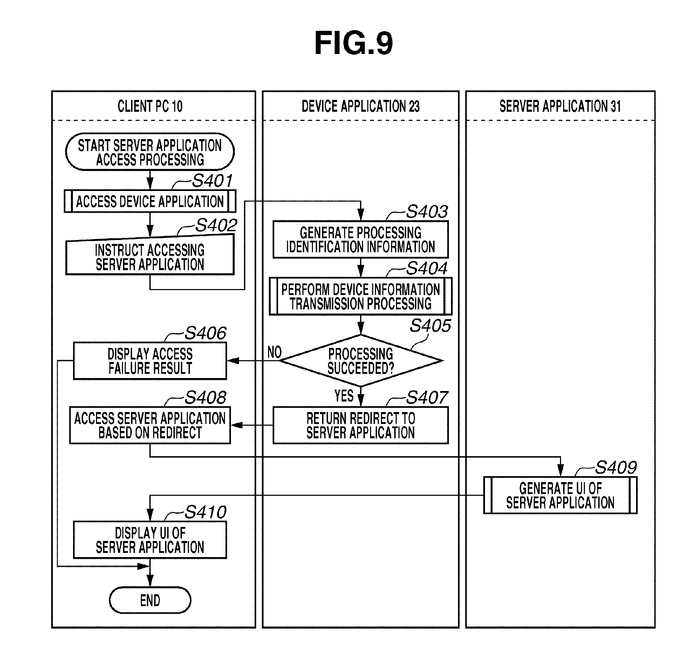

When the user A accesses the server application 31, latest information of the digital multifunction peripheral 20 that the server application 31 requires can be transmitted to the server application 31 by once accessing the device application 23. Fig. 9 is a flowchart illustrating a processing procedure of example processing to be performed when the user A accesses the server application 31 via the device application 23. Example server application access processing is described below with reference to Fig. 3 through Fig. 9.

In step S401, the user A accesses the device application 23 via the browser 110 of the client PC 10. The processing to be performed in this step is similar to the processing described in the device application access processing illustrated in Fig. 5, and therefore the description for this step is not repeated.

Subsequently, in step S402, the user A instructs accessing the server application 31 using the top screen of the device application 23 displayed in the browser 110. More specifically, the user A selects a link to access the server application 31 that is displayed in the server application information and state display area 503 provided in the top screen of the device application 23 (i.e., the example illustrated in Fig. 4A or 4B).

Any other unit can be used if it can realize a method for accessing the server application 31.

Subsequently, if the device application processing control unit 230 receives the user's instruction to access the server application 31 generated in step S402, then in step S403, the device application processing control unit 230 generates processing identification information to maintain the consistency of the processing.

In the present exemplary embodiment, the processing identification information is a unique ID. However, the processing identification information can be any other information. Any other unit capable of generating the processing identification information can be used. For example, the processing identification information can include time information (e.g., year, month, day, hour, minute, second) with respect to implementation of the above-described step. The processing identification information may include information identifying the digital multifunction peripheral 20 or information identifying the user A.

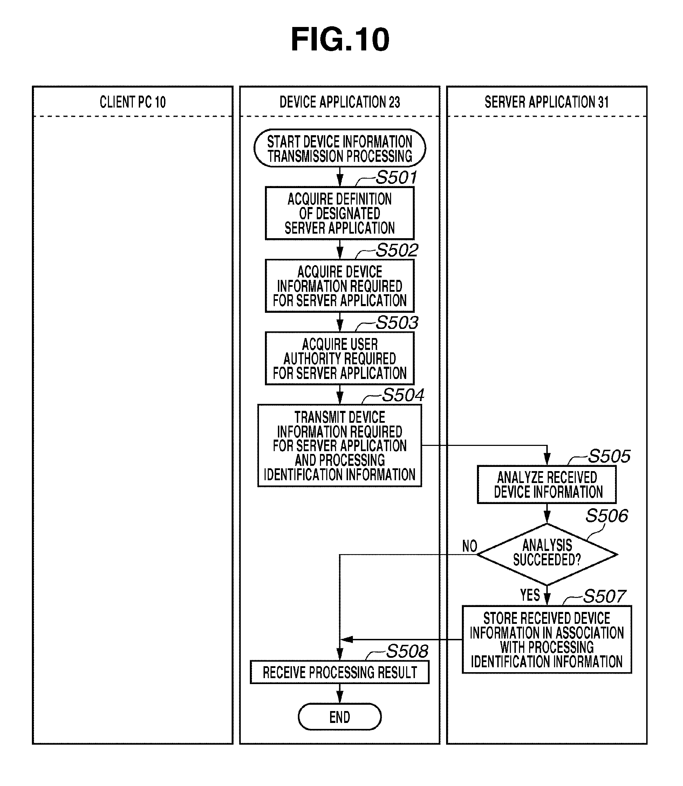

Subsequently, in step S404, the device application processing control unit 230 acquires latest information relating to the digital multifunction peripheral 20 that the server application 31 requires, which the user instructed to access in step S402, and transmits the acquired information to the server application 31. The content of the processing to be performed in step S404 is described below in more detail with reference to Fig. 10.

Subsequently, in step S405, the device application processing control unit 230 confirms whether the processing in step S404 for transmitting the information relating to the digital multifunction peripheral 20 to the server application 31 is successful. Subsequently, if the processing failure is confirmed (NO in step S405), then in step S406, the device application processing control unit 230 sends a response indicating the failure in access to the server application 31. The browser 110 displays the received result.

If the processing having been successfully completed is confirmed (YES in step S405), then in step S407, the device application processing control unit 230 generates a redirect response to be sent to the server application 31 and returns the generated redirect response to the browser 110. In the present exemplary embodiment, the redirect response includes location information (e.g., URL) representing the server application 31 and the processing identification information generated in step S403.

The above-described processing for generating the redirect response and returning the response including the generated redirect response to the browser 110 enables the user to receive a predetermined UI (User Interface) of the server application 31 without inputting the location information to the browser 110.

Subsequently, if the browser 110 receives the redirect response to be sent to the server application 31 generated in step S407, then in step S408, the browser 110 accesses the server application 31 according to the location information included in the redirect response.

In the present exemplary embodiment, the processing identification information generated in step S403 is also sent to the server application 31. When the digital multifunction peripheral 20 transmits the redirect response to the client PC 10, the client PC 10 can access the server computer 30 (more specifically, the server application 31).

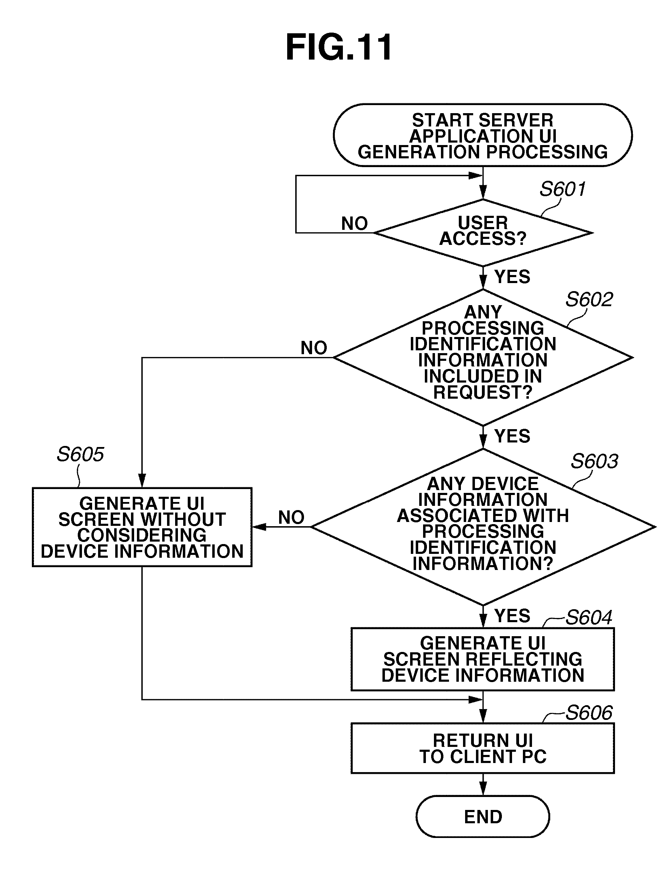

Subsequently, if the server application 31 receives the request from the browser 110 through the processing performed in step S408, then in step S409, the server application 31 generates a UI of the server application 31, and performs UI screen transmission processing. The screen transmission processing includes transmitting screen information (e.g., HTML file) of the UI screen. The processing to be performed in step S409 is described below in more detail with reference to Fig. 11.

Subsequently, in step S410, the client PC 10 displays in the browser 110 the UI transmitted from the server application 31 through the processing performed in step S409. The user performs settings using the UI (i.e. , a setting screen) displayed in the browser 110. The information having been set by the user, i.e., setting information, is transmitted to the server computer 30. The server computer 30 causes a program, which is required to realize a user's requesting service, to reflect the setting information, and executes the program.

Through the above-described processing, effective transmission of device information to the server computer 30 can be realized with lesser communications. Further, the server computer 30 can provide a UI that reflects the device information to the client PC 10. Next, example device information transmission processing is described. In step S404, latest information relating to the digital multifunction peripheral 20 that the server application 31 requires, which the user has instructed to access, is acquired and transmitted to the server application 31.

Fig. 10 is a flowchart illustrating a processing procedure of example processing to be performed when the device application 23 transmits the information relating to the digital multifunction peripheral 20 that the server application 31 requires. Hereinbelow, the information transmission processing is described below in more detail with reference to Fig. 1, Fig. 3, Fig. 7, Fig. 9, and Fig. 10.

In step S501, the device application processing control unit 230 acquires the definition information 800 that defines the server application 31, which the user A instructed to access in step S402, from the server application information management unit 232.

Subsequently, in step S502, the device application processing control unit 230 analyzes the definition information 800 that defines the server application 31 acquired in step S501, and acquires information relating to the digital multifunction peripheral 20 that the server application 31 requires. More specifically, the device application control unit 230 instructs the server application information analysis unit 233 to analyze the capability information 803 (i.e., a part of the definition information 800) of the digital multifunction peripheral 20 that the server application 31 requires.

In the present exemplary embodiment, the server application 31 uses the print function of the digital multifunction peripheral 20. Therefore, the information to be acquired as the print capability of the digital multifunction peripheral 20 includes color mode and two-sided print mode.

Subsequently, in step S503, the device application processing control unit 230 acquires the authority information of the user A for the capability information 803 of the digital multifunction peripheral 20 analyzed in step S502. More specifically, first, the device application processing control unit 230 instructs the user authority information acquisition unit 235 to acquire the authority information of the user A from the user authority management unit 220 of the authority management application 22.

Next, the device application processing control unit 230 confirms whether the acquired authority information of the user A includes any information that restricts the capability information 803 of the digital multifunction peripheral 20. The device application processing control unit 230 extracts the authority information of the user A if such restrictive information is included. For example, the authority information of the user A may include selecting a monochrome print mode even if the print capability of the digital multifunction peripheral 20 includes a color print mode. It is therefore necessary to prevent the user A from selecting the color print mode.

Subsequently, in step S504, the device application processing control unit 230 transmits the information of the digital multifunction peripheral 20 that the server application 31 requires and the processing identification information generated in step S403 to the server application 31. In the present exemplary embodiment, the information of the digital multifunction peripheral 20 that the server application 31 requires includes the capability information of the digital multifunction peripheral 20 acquired in step S502 and the capability information of the digital multifunction peripheral 20 to be restricted according to the authority information of the user A acquired in step S503.

Subsequently, in step S505, the server application processing control unit 310 instructs the device cooperation information analysis unit 313 to analyze the information of the digital multifunction peripheral 20 received in step S504. More specifically, the device cooperation information analysis unit 313 determines whether the information of the digital multifunction peripheral 20 includes all functions of the digital multifunction peripheral 20 that the server application 31 uses. The analysis processing is not limited to the above-described processing.

Subsequently, in step S506, the server application processing control unit 310 confirms a result of the analysis on the information of the digital multifunction peripheral 20, which was performed in step S505. Subsequently, if it is determined that the analysis processing has succeeded (YES in step 5506) , then in step S507, the server application processing control unit 310 stores the information relating to the digital multifunction peripheral 20 in association with the processing identification information transmitted from the device application 23 in step S504.

More specifically, the information relating to the digital multifunction peripheral 20 can be stored in a memory of the server application 31 or in a storage area of a database (not illustrated). Subsequently, in step S508, the device application 23 receives the result of the processing performed in step S506 or step S507 from the server application 31.

As described above, at the timing when a user access the server application 31 via the device application 23, the latest information of the digital multifunction peripheral 20 that the server application 31 requires can be transmitted to the server application 31. Therefore, a service can be received from the server computer 30 without performing useless communications.

Next, an example method for generating screen information of the setting screen, which enables users to perform settings for the server application 31 (i.e., a predetermined program), is described below. The server application 31 that has received the request from the browser 110 in step S409 generates the UI of the server application 31, and returns a response including the generated UI of the server application 31. Fig. 11 is a flowchart illustrating a processing procedure of example processing to be performed when the server application 31 generates the UI. The UI generation processing is described below in more detail with reference to Fig. 9 through Fig. 12.

In step S601, the server application processing control unit 310 confirms whether the user A has accessed the server application 31 via the browser 110.

Subsequently, if it is determined that the user A has accessed the server application 31 (YES in step S601), then in step S602, the server application processing control unit 310 confirms whether the request from the browser 110 includes processing identification information. More specifically, the server application processing control unit 310 confirms the presence of the processing identification information generated in step S403 and transmitted by the device application 23 in step S504.

Subsequently, if it is determined that the presence of the processing identification information is confirmed (YES in step S602), then in step S603, the server application processing control unit 310 determines whether device information associated with the processing identification information is present.

More specifically, the server application processing control unit 310 confirms whether the processing identification information transmitted by the device application 23, which is stored in step S507, coincides with the processing identification information included in the request from the browser 110, which is checked in step S602.

Next, if it is determined that the processing identification information transmitted by the device application 23 coincides with the processing identification information included in the request from the browser 110, the server application processing control unit 310 confirms whether the information of the digital multifunction peripheral 20 associated with the processing identification information stored in step S507 is present.

Subsequently, in step S604, the server application processing control unit 310 instructs the UI control unit 311 to generate screen information of the UI screen that reflects the information of the digital multifunction peripheral 20, using the information of the digital multifunction peripheral 20 whose presence has been confirmed in step S603.

Fig. 12 illustrates an example of the UI of the server application 31 that can be displayed in the browser 110 of the client PC 10 when a user accesses the server application 31. The server application 31 according to the present exemplary embodiment has a document management function, as described below.

The UI of the server application 31 has the following configuration. More specifically, the UI of the server application 31 includes a repository area 601 that displays a tree view of an internal structure of the server application 31, a search box 602 usable to search a document in the server application 31, and a document list area 603 that displays a thumbnail or an icon representing each document.

Further, the UI of the server application 31 includes a preview area 604 that displays a preview image or property information of a document selected in the document list area 603 and a print button 605 operable to instruct the digital multifunction peripheral 20 to perform printing of the selected document. Further, the UI of the server application 31 includes a details setting button 606 that enables users to perform detailed printing settings for the digital multifunction peripheral 20 and a print setting display area 607.

The device and print setting display area 607 is a display area that reflects the information of the digital multifunction peripheral 20 whose presence has been confirmed in step S603. More specifically, general information (e.g., name) relating to the digital multifunction peripheral 20 and print capability of the digital multifunction peripheral 20, which reflects the authority of the user A when the server application 31 uses the print function of the digital multifunction peripheral 20, can be displayed in the device and print setting display area 607.

Thus, the user can control a cooperative operation between the server application 31 and the digital multifunction peripheral 20 using the UI that reflects the latest information of the digital multifunction peripheral 20.

The UI screen according to the present exemplary embodiment is not limited to the UI screen illustrated in Fig. 12 in display pattern, area configuration, and control content. Therefore, the screen can be modified in various ways if the required function can be realized.

If it is determined that the presence of the processing identification information is not confirmed (NO in step S602), then in step S605, the server application processing control unit 310 instructs the UI control unit 311 to generate screen information of the UI screen without considering the information of the digital multifunction peripheral 20. More specifically, the print button 605, the details setting button 606, and the device and print setting display area 607 are grayed out or not displayed.

According to the above-described exemplary embodiment, users can confirm the availability of the server application referring to the function and state of the image forming apparatus and user's authority, without accessing the server application unnecessarily. Further, as another effect, transmitting minimum required information relating to the image forming apparatus to the server application is feasible by defining the information relating to the image forming apparatus that the server application requires. Therefore, reduction in communication fee and storage usage fee can be realized when a user accesses the server application.

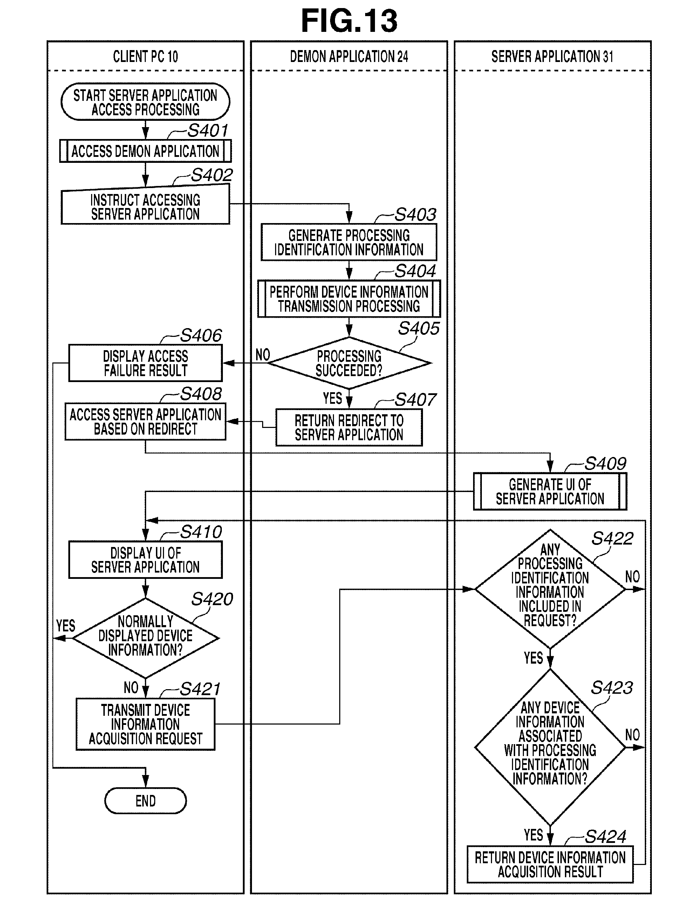

A second exemplary embodiment of the present invention is described below with reference to Fig. 13 through Fig. 15. A device cooperation system according to the second exemplary embodiment is different from the device cooperation system described in the first exemplary embodiment in that, when the user A accesses the server application 31, the latest information of the digital multifunction peripheral 20 that the server application 31 requires can be asynchronously transmitted to the server application 31. More specifically, the client PC can perform processing for transmitting the device information in parallel to the processing for accessing the server application 31.

As a result, the user can speedily complete accessing the server application 31 via the client PC 10. The user can promptly start settings for items that can be set without cooperating with the digital multifunction peripheral 20. Hereinbelow, the device cooperation system according to the second exemplary embodiment is described below only for unique features that are different from those described in the first exemplary embodiment.

Compared to the system configuration described in the first exemplary embodiment, the digital multifunction peripheral 20 additionally includes a demon application 24 that can asynchronously cooperate with the server application 31.

Compared to the software configuration described in the first exemplary embodiment, the digital multifunction peripheral 20 additionally includes the demon application 24. A demon application processing control unit 240 receives an instruction transmitted to the demon application 24, and performs a control for each processing unit. A device information acquisition unit 241 and a user authority information acquisition unit 242 have functions similar to those of the device information acquisition unit 234 and the user authority information acquisition unit 235 included in the device application 23.

The processing for accessing the server application 31 is described below, only for a portion different from those described in the first exemplary embodiment, with reference to Fig. 13.

The processing for accessing the server application 31 according to the second exemplary embodiment includes the following asynchronous communication to be performed when the user A accesses the server application 31. More specifically, the demon application 24 can asynchronously transmit latest information of the digital multifunction peripheral 20 that the server application 31 requires by accessing the device application 23.

Fig. 13 is a flowchart illustrating a processing procedure of example processing to be performed when the user A accesses the server application 31 via the device application 23. Example server application access processing is described below with reference to Fig. 13.

Processing to be performed in steps S401 through S409 is similar to the processing performed in steps S401 to S409 described in the first exemplary embodiment with reference to the flowchart illustrated in Fig. 9, and therefore detailed descriptions for these steps are not repeated. However, the processing to be performed in steps S404 and S405 according to the second exemplary embodiment is different from the processing described in the first exemplary embodiment as described below.

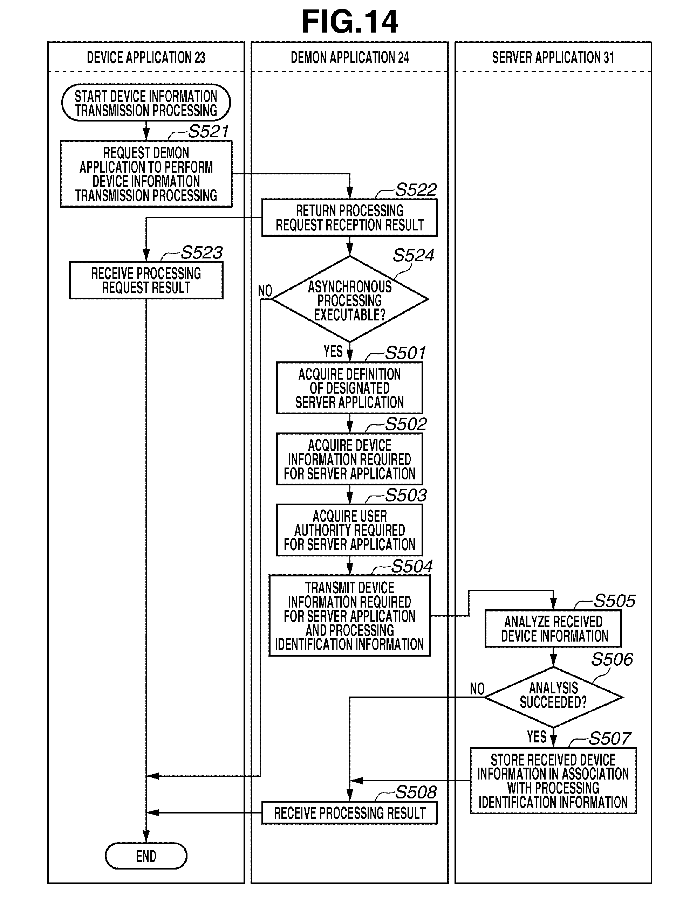

In step S404, the device application processing control unit 230 requests the demon application 24 to transmit the information of the digital multifunction peripheral 20 to the server application 31. The demon application 24 asynchronous transmits the information of the digital multifunction peripheral 20. The processing to be performed in step S404 is described below in more detail with reference to Fig. 14.

Subsequently, in step S405, the device application processing control unit 230 confirms whether the demon application 24 has normally accepted the information transmission request (requesting transmission of the information of the digital multifunction peripheral 20 to the server application 31) having been requested in step S404.

Processing to be performed in the following steps is different from that described in the first exemplary embodiment. In step S420, the client PC 10 confirms whether the information of the digital multifunction peripheral 20 that the server application 31 requires is normally displayed on the UI of the server application 31 displayed in the browser 110 in step S410.

In the present exemplary embodiment, in step S404, the demon application 24 asynchronously transmits the information of the digital multifunction peripheral 20 to the server application 31. Therefore, in step S409, i.e., at the timing of the server application UI generation processing, the processing of the demon application 24 in step S404 (i.e., the processing for transmitting the information of the digital multifunction peripheral 20) may not be completed.

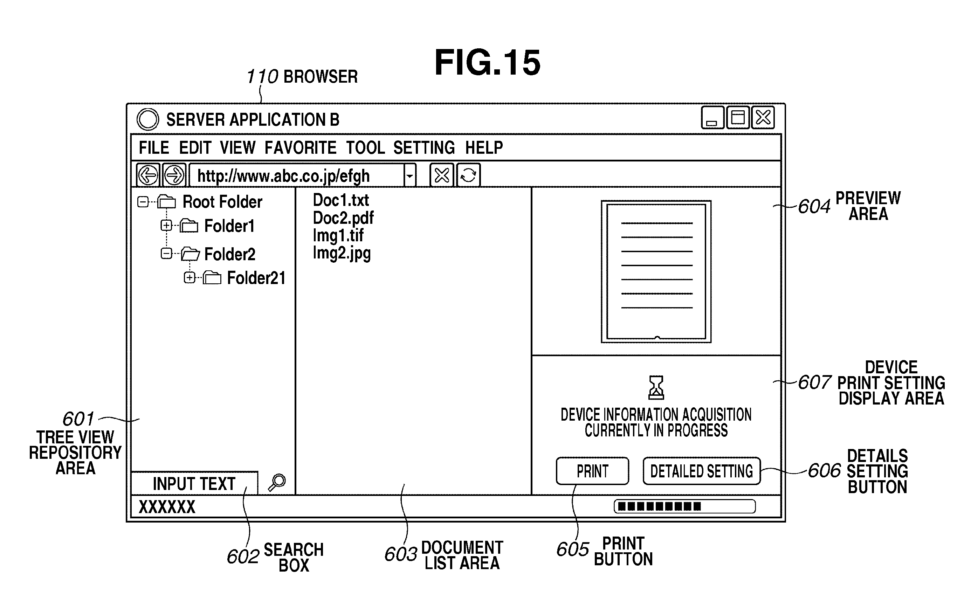

Fig. 15 illustrates an example UI of the server application 31 that can be displayed in the browser 110 of the client PC 10 when a user accesses the server application 31. Compared to the UI of the server application 31 according to the first exemplary embodiment illustrated in Fig. 12, the UI of the server application 31 illustrated in Fig. 15 displays a message indicating that acquisition of the digital multifunction peripheral information is currently in progress in the device and print setting display area 607.

In this case, it is desired that a program operable in the browser 110, such as JavaScript or RIA technique, is packaged in the device and print setting display area 607. This is effective in that automatically inquiring the server application 31 about the information of the digital multifunction peripheral 20 is feasible without requiring any user operation.

The UI screen according to the present exemplary embodiment is not limited to the UI screen illustrated in Fig. 15 in display pattern, area configuration, and control content. Therefore, the screen can be modified in various ways if the required function can be realized.

In particular, in the device and print setting display area 607, instead of using JavaScript or RIA technique, it may be useful to employ a configuration to enable users to inquire the server application 31 about the information of the digital multifunction peripheral 20.

Subsequently, if it is confirmed that the information of the digital multifunction peripheral 20 is not displayed (NO in step S420), then in step S421, the client PC 10 transmits a digital multifunction peripheral information acquisition request to the server application 31. More specifically, the program packaged in the device and print setting display area 607 adds the processing identification information generated in step S403 to the request, and transmits the request including the processing identification information to the server application 31.

Subsequently, if the transmission of the digital multifunction peripheral information acquisition request in step S421 is completed, then in step S422, the server application processing control unit 310 confirms whether the request from the browser 110 includes the processing identification information.

Subsequently, if the presence of the processing identification information is confirmed (YES in step S422), then in step S423, the server application processing control unit 310 determines whether there is any device information associated with the processing identification information.

Subsequently, in step S424, the server application processing control unit 310 instructs the UI control unit 311 to generate screen information of the UI screen that reflects the information of the digital multifunction peripheral 20 using the confirmed information of the digital multifunction peripheral 20. Further, the server application processing control unit 310 returns a response including the generated screen information of the UI screen.

The device information transmission processing according to the present exemplary embodiment is described below, for only a portion different from those described in the first exemplary embodiment, with reference to Fig. 14. Fig. 14 is a flowchart illustrating a processing procedure of example processing to be performed when the demon application 24 transmits the information of the digital multifunction peripheral 20 that the server application 31 requires. The device information transmission processing is described below in more detail with reference to Fig. 14 and Fig. 15.

In step S521, the device application processing control unit 230 of the device application 23 requests the demon application 24 to transmit the information of the digital multifunction peripheral 20 to the server application 31.

Subsequently, if the demon application 24 receives the request from the device application 23 having been requested in step S521, then in step S522, the demon application processing control unit 240 of the demon application 24 determines whether to accept the processing for transmitting the information of the digital multifunction peripheral 20 to the server application 31, and returns a response including a determination result.

Subsequently, in step S523, the device application processing control unit 230 receives the determination result with respect to the request for transmitting the information of the digital multifunction peripheral 20 to the server application 31, which is returned from the demon application 24 in step S522.

Subsequently, in step S524, the demon application processing control unit 240 determines whether to asynchronously transmit the information of the digital multifunction peripheral 20 to the server application 31 according to the acceptance result in step S522 with respect to the digital multifunction peripheral information transmission processing.

Processing to be performed in the subsequent steps is similar to the processing performed in step S501 to step S508 described in the first exemplary embodiment with reference to the flowchart illustrated in Fig. 10, and therefore detailed descriptions for these steps are not repeated. However, the second exemplary embodiment is different from the first exemplary embodiment in that the demon application 24 executes the above-described processing performed by the device application 23.

According to the second exemplary embodiment, the image forming apparatus information that the server application requires can be asynchronously transmitted. Therefore, compared to the first exemplary embodiment, the processing time required when a user accesses the server application can be reduced.

In each of the above-described exemplary embodiments, the digital multifunction peripheral 20 (i.e., the image forming apparatus) has the capability of registering the server application 31. However, according to another exemplary embodiment, the client PC 10 may have the capability of registering the server application 31. In this case, another exemplary embodiment is different from the former exemplary embodiments in the following features.

A device cooperation system according to another exemplary embodiment has the following configuration. The client PC 10 includes the server application information management unit 232 and the server application information analysis unit 233. Next, example processing according to the present exemplary embodiment is described below. The client PC 10 executes the processing illustrated in Fig. 6. The client PC 10 can acquire the information in step S205 and step S206 by communicating with the digital multifunction peripheral 20.

The client PC 10 executes the processing illustrated in Fig. 8 (i.e., the processing in steps S304, S306, S307, and S308). The client PC 10 further executes the processing illustrated in Fig. 9 (i.e., the processing in steps S403, S404, S405, and S407). Further, the client PC 10 directly (not redirectly) accesses the server application 31.

Further, in step S404, the client PC 10 receives latest device information from the digital multifunction peripheral 20, and transmits the received device information to the server application 31. In this case, the client PC 10 can receive necessary information from the digital multifunction peripheral 20 based on the definition information 800. The received device information may include any other information.

Further, in each of the above-described exemplary embodiments, the client PC 10 displays the top screen. However, according to another exemplary embodiment, the top screen can be displayed on a display device of the digital multifunction peripheral 20. In this case, a device cooperation system according to this exemplary embodiment has the following features. The digital multifunction peripheral 20 has the browser 110. The digital multifunction peripheral 20 performs processing similar to the processing performed by the client PC 10 in the flowcharts illustrated in Fig. 8, Fig. 9, and Fig. 10.

Further, in each of the above-described exemplary embodiments, the top screen illustrated in Fig. 4A or Fig. 4B displays the state of each Internet server application as, e.g., "normal" or "occurrence of error", to indicate the availability of each application. However, the displayable contents are not limited to the above-described examples. Any other display method is employable to have users know the availability of each Internet server application.

More specifically, it is useful to display each Internet server application only when it is usable. In this case, it is apparent that non-displayed Internet server applications are not usable. Further, if the state of a server application is normal, it may be useful to display only a name of the server application.

Further, executing the following processing can attain the object of the present invention. More specifically, the processing includes supplying a storage medium that stores software program codes capable of realizing the functions of the above-described exemplary embodiments to a system or an apparatus, and causing a computer (or CPU or micro-processing unit (MPU)) provided in the system or the apparatus to read the stored program codes from the storage medium. In this case, the program codes read out of the storage medium can realize characteristic functions of the exemplary embodiments. The program codes and the storage medium storing the program codes constitute the present invention.

Aspects of the present invention can also be realized by a computer of a system or apparatus (or devices such as a CPU or MPU) that reads out and executes a program recorded on a memory device to perform the functions of the above-described embodiments, and by a method, the steps of which are performed by a computer of a system or apparatus by, for example, reading out and executing a program recorded on a memory device to perform the functions of the above-described embodiments. For this purpose, the program is provided to the computer for example via a network or from a recording medium of various types serving as the memory device (e.g., computer-readable medium). In such a case, the system or apparatus, and the recording medium where the program is stored, are included as being within the scope of the present invention.

While the present invention has been described with reference to exemplary embodiments, it is to be understood that the invention is not limited to the disclosed exemplary embodiments. The scope of the following claims is to be accorded the broadest interpretation so as to encompass all modifications, equivalent structures, and functions.

## Claims

1. An image forming apparatus (20) that can communicate with a service provision apparatus, the image forming apparatus comprising:
reception means configured to receive functional information of the image forming apparatus, the functional information being usable by the service provision apparatus to provide a service to a user by cooperating with the image forming apparatus;
determination means configured to determine whether a function of the image forming apparatus indicated by the information received by the reception means is realizable;
generation means configured to generate screen information indicating that the service cannot be provided to the user if the determination means determines that the function of the image forming apparatus is unrealizable; and
transmission means configured to transmit the screen information generated by the generation means.

2. An image forming apparatus according to claim 1, wherein the transmission means is configured to transmit the screen information generated by the generation means to a client apparatus.

3. The image forming apparatus according to claim 2, wherein the determination means is configured to determine whether the function of the image forming apparatus is realizable when a user accesses the image forming apparatus via the client apparatus.

4. The image forming apparatus according to any preceding claim, wherein when the service provision apparatus executes a predetermined program to realize the service,
the reception means is configured to receive authority information as information relating to a user who has a right to cause the service provision apparatus to execute the predetermined program,
the determination means is configured to determine whether the user has the right to execute the predetermined program based on the authority information,
the generation means is configured to generate screen information indicating that the service cannot be provided to the user together with a reason why the service cannot be provided to the user if the determination means determines that the function of the image forming apparatus is unrealizable or determines that the user has no right to execute the predetermined program, and
the generation means is configured to generate screen information indicating that the service can be provided to the user if the determination means determines that the function of the image forming apparatus is realizable and further determines that the user has the right to execute the predetermined program.

5. A device cooperation system including an image forming apparatus according to any one of claims 2 to 4, a service provision apparatus that can provide a user a service by cooperating with the image forming apparatus, and a client apparatus,
wherein the transmission means of the image forming apparatus is configured to transmit capability information as information relating to capability of the image forming apparatus to the service provision apparatus and transmit an instruction to access the service provision apparatus to the client apparatus, when the user instructs receiving the service via a screen displayed by the client apparatus based on the screen information,
wherein the client apparatus comprises access means configured to access the service provision apparatus in response to the instruction to access the service provision apparatus transmitted by the transmission means,
wherein the service provision apparatus comprises:
screen generation means configured to generate a setting screen that is usable to perform setting for a predetermined program to be executed to realize the service, based on the capability information transmitted by the transmission means; and
screen transmission means configured to transmit the setting screen generated by the screen generation means in response to access by the access means of the client apparatus,
wherein the client apparatus is configured to transmit setting information relating to the setting performed by the user via the setting screen transmitted from the screen transmission means to the service provision apparatus, and the service provision apparatus is configured to execute the predetermined program based on the setting performed by the user in response to reception of the setting information.

6. An image forming apparatus according to claim 1, wherein the transmission means is configured to transmit the screen information to a display means of the image forming apparatus for display of a screen indicating that the service cannot be provided to the user based on the screen information generated by the generation means.

7. A service provision method for a device cooperation system including at least an image forming apparatus and a service provision apparatus that can provide a service to a user by cooperating with the image forming apparatus, the service provision method comprising:
receiving functional information of the image forming apparatus that is required to realize the service;
determining whether a function of the image forming apparatus indicated by the information received by the reception means is realizable;
generating screen information indicating that the service cannot be provided to the user if it is determined that the function of the image forming apparatus is unrealizable; and
displaying a screen indicating that the service cannot be provided to the user based on the generated screen information.

8. A program which, when run on a device, causes the device to execute a service provision method according to claim 7.

9. A computer-readable storage medium storing a program according to claim 8.
